# EUROPEAN PATENT APPLICATION

(11) **EP 4 417 313 A1**
(43) Date of publication of application: **21.08.2024**
(21) Application number: 24150889.4
(22) Date of filing: 09.01.2024
(51) Int. Cl.: B03B 9/06

(54) **LITHIUM-ION BATTERY CATHODE MATERIAL RECOVERY SYSTEM AND LITHIUM-ION BATTERY CATHODE MATERIAL RECOVERY METHOD USING**

(30) Priority: 15.02.2023 KR 20230019835
(71) Applicant: Lee, Ha Baik, Yangsan-si, Gyeongsangnam-do 50605 (KR); Lee, See Young, Yangsan-si, Gyeongsangnam-do 50625 (KR)
(72) Inventor: Lee, Ha Baik, Yangsan-si, Gyeongsangnam-do 50605 (KR); Lee, See Young, Yangsan-si, Gyeongsangnam-do 50625 (KR)
(74) Representative: Viering, Jentschura & Partner mbB Patent- und Rechtsanwälte

(57) **Abstract**

The present disclosure provides a lithium-ion battery cathode material recovery system and a lithium-ion battery cathode material recovery method, wherein in order to provide a lithium-ion battery recycling process that improves the recovery rate due to scattering of cathode material powder generated in the lithium-ion battery recycling process and ensures safety capable of overcoming risk factors such as fire and explosion during the battery crushing process, the lithium-ion battery cathode material recovery system includes a crusher, a dryer, a first separator, a first vibrating screen, a second separator, a second vibrating screen and an eddy current separator, and a dust collector for recovering dust generated in the first separator, the second separator, the first vibrating screen, and the second vibrating screen, and wherein the crusher, the dryer, the first separator, the first vibrating screen, the second separator, the second vibrating screen, the eddy current separator, and the dust collector are sealed to prevent the inflow of external air, and are operated in an inert gas environment.

## Description

### [Technical Field]

The present disclosure relates to recycling of lithium-ion batteries, and more specifically, to a process for effectively recovering expensive metals and metal oxide materials used in lithium-ion batteries, and an additional recovery facility for increasing the recovery rate of cathode materials.

### [Background Art]

Currently, efforts are being made in various fields to reduce the use of fossil fuels due to the serious problem of climate change. In particular, the transition from internal combustion engine vehicles to electric vehicles using secondary batteries is one of the biggest changes. Accordingly, as the spread and use of electric vehicles increases, active research and development are being conducted on recovery and recycling methods for valuable metals used in secondary batteries.

Lithium-ion batteries, the most universally applied secondary batteries in electric vehicles and energy storage systems (ESS), are diverse depending on the composition of materials such as NCM, LFP, LCO, and LMO. NCM batteries are mainly used domestically and also account for the largest portion overseas. NCM batteries use NCM oxides, which are made by oxidizing three metals such as nickel, cobalt, and manganese, as a precursor for the cathode materials. In addition, lithium combined with NCM oxides is used as a cathode material.

However, cobalt among the cathode materials is a metal in which recycling is essential for stable battery production since it is very expensive and has great supply and demand difficulties. Additionally, as the demand for batteries increases, the prices of nickel, lithium, etc. are also rising very sharply. Moreover, strong regulations on lithium-ion battery recycling are also expected to be implemented. Currently, the place that is progressing related regulations the fastest is Europe, which has already drawn up a regulatory plan that requires a certain amount of recycled materials to be used during the production of lithium-ion batteries and the amount must be increased step by step. In addition, an environment is also being created where recycling efficiency must be reached a certain level or more by setting regulatory values for recycling efficiency in the recycling process. Accordingly, the recovery rate of major materials has become a very important factor in the development of a lithium-ion battery recycling process, and it is necessary to develop a lithium-ion battery recycling process that can meet the standards.

Among the conventional treatment methods for recovering cathode materials, there was a method of dissolving the cathode in a strong acid solution and then separating and recovering expensive metals such as lithium, cobalt, and nickel in the dissolved solution. However, first, since the process cost to separate each metal with high purity was not only excessively required, but also strong acid had to be used when dissolving the anode, there have been problems such as serious environmental pollution, and corrosion of facilities due to the acid. Additionally, when recovering the cathode material in an oxidizing gas atmosphere, there is a problem in that the recovery of the cathode material is not easy due to the generation of by-products.

Accordingly, a method of reducing environmental pollution was examined by applying a method of crushing and pulverizing the battery and mechanically atomizing (powdering) each component of the battery, especially the cathode material, to recover it. However, a phenomenon in which cathode material dust (powder) generated in the process step scatters occurs, and process losses inevitably occur so that improvement thereof is necessary. In addition, since a short circuit occurs during crushing of lithium-ion batteries, which may lead to fire or explosion as the lithium-ion battery recycling process includes a battery crushing process, it is necessary to develop a battery recycling process capable of overcoming risk factors such as fire and explosion.

### [Disclosure]

### [Technical Problem]

In order to solve the problems as described above, an object of the present disclosure is to improve the loss of recovery rate due to scattering of cathode material dust (powder) generated in the lithium-ion battery recycling process, and another object of the present disclosure is to provide a lithium-ion battery recycling process that ensures safety capable of overcoming the risk elements such as fire and explosion during the battery crushing process.

### [Technical Solution]

In order to solve the problems as described above, the present disclosure provides a lithium-ion battery cathode material recovery system including: a crusher that physically crushes lithium-ion batteries to produce a primary crushed material; a dryer for drying the primary crushed material; a first separator that produces a secondary crushed material by applying a physical impact in order to separate the cathode material from the primary crushed material that has passed through the dryer; a first vibrating screen for separating the cathode material from the secondary crushed material that has passed through the first separator using differences in specific gravity, area density, and size of the cathode material, and then recovering the cathode material and producing a tertiary crushed material; a second separator that produces a quaternary crushed material by applying a physical impact in order to separate the cathode material from the tertiary crushed material that has passed through the first vibrating screen; a second vibrating screen for separating the cathode material from the quaternary crushed material that has passed through the second separator using differences in specific gravity, area density, and size of the cathode material, and then recovering the cathode material and discharging non-ferrous metals and non-metals; a dust collector for recovering dust generated from at least one of the first separator, the second separator, the first vibrating screen, and the second vibrating screen; and an eddy current separator for separating the non-ferrous metals and non-metals discharged from the second vibrating screen, wherein the crusher, the dryer, the first separator, the first vibrating screen, the second separator, the second vibrating screen, and the eddy current separator are sequentially connected by a conveyor, thereby allowing the primary crushed material, the secondary crushed material, the tertiary crushed material, the quaternary crushed material, and the non-ferrous metals and non-metals to be automatically transported so that the process of separating the cathode material from the lithium-ion batteries is performed continuously, while effectively recovering the cathode material dust to enable the recovery rate to be improved.

Furthermore, the present disclosure provides a lithium-ion battery cathode material recovery method, as a cathode material recovery method using the lithium-ion battery cathode material recovery system, including: a lithium-ion battery crushing step of crushing the lithium-ion batteries with the crusher to produce the primary crushed material; a primary crushed material drying step of drying the primary crushed material in the dryer; a cathode material recovery step of recovering the cathode material from the primary crushed material dried in the primary crushed material drying step; and a non-metal and non-ferrous metal recovery step of separating and recovering the non-metals and the non-ferrous metals by separating the non-metals and the non-ferrous metals that have passed the cathode material recovery step using the eddy current separator.

### [Advantageous Effects]

According to one embodiment of the present disclosure, process losses occurring in the recycling process can be reduced by effectively collecting the cathode material dust generated during the cathode material recovery process and then recovering it secondarily.

Additionally, according to one embodiment of the present disclosure, risks such as fire and explosion can be prevented by blocking the entire process from external air and operating it in an inert gas environment.

### [Description of Drawings]

FIGS. 1 to 3 are schematic diagrams of a lithium-ion battery cathode material recovery system according to the embodiment of the present disclosure.

FIGS. 4 and 5 are flowcharts of a lithium-ion battery cathode material recovery method according to the embodiment of the present disclosure.

### [Mode for Disclosure]

Hereinafter, embodiments of the present disclosure are described in detail. However, the present disclosure is not limited to the embodiments disclosed below, but may be implemented in various different forms. The present embodiments are only provided to ensure that the disclosure of the present disclosure is complete and to more completely inform those skilled in the art of the content of the present disclosure.

In the present specification, when an element is referred to as being located 'above' or 'below' another element, this includes both the meaning that one element may be located directly 'above' or 'below' another element, or that an additional element may be interposed between those elements.

In the present specification, the terms 'upper' or 'lower' are relative concepts established from the observer's point of view, and if the observer's point of view changes, 'upper' may mean 'lower', and 'lower' may mean 'upper'.

The lithium-ion battery cathode material recovery system and method will be described in detail with reference to the drawings below.

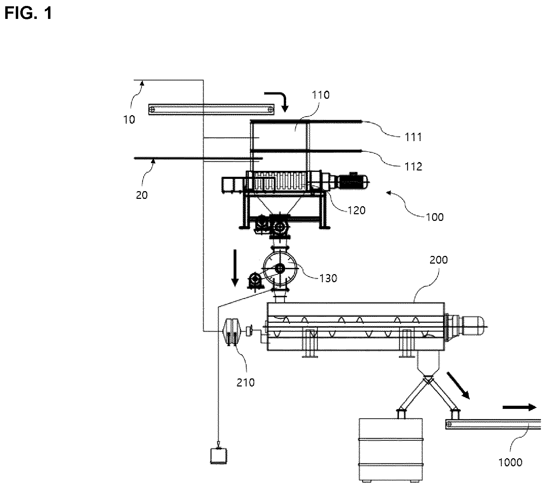

FIGS. 1 to 3 are schematic diagrams of a lithium-ion battery cathode material recovery system according to the embodiment of the present disclosure.

Referring to FIG. 1, a lithium-ion battery cathode material recovery system may include a crusher 100 and a dryer 200.

The crusher 100 is a facility for physically crushing lithium-ion batteries. For example, it may be selected from a single-axis crusher, a two-axis crusher, a three-axis crusher, a four-axis crusher, and combinations thereof, but is not limited thereto. Preferably, a 4-axis crusher can be used considering the input capacity and the size of lithium-ion batteries to be crushed. Accordingly, the lithium-ion batteries can be crushed to a size of 10 to 100 mm to produce a primary crushed material. Preferably, the primary crushed material can be produced by crushing the lithium-ion batteries to a size of 50 mm or less.

The crusher 100 may be provided with a crusher hopper 110 at the top. At this time, a first gate 111 may be formed at the top of the crusher hopper 110, and a second gate 112 may be formed at the bottom of the crusher hopper 110 at a predetermined interval from the first gate 111. Accordingly, when the lithium-ion batteries are put into the crusher 100 through the crusher hopper 110, the situation where the inside of the crusher 100 is exposed to the outside can be minimized.

For example, in order to put the lithium-ion batteries into the crusher hopper 110, the first gate 111 is opened in a state in which the second gate 112 is closed. After the lithium-ion batteries are input through the opened first gate 111, the first gate 111 is closed, and then the second gate 112 is opened so that the lithium-ion batteries may be put into the crusher 100. Accordingly, the situation where the inside of the crusher 100 in operation is exposed to the outside can be minimized, thereby ensuring safety and preventing the inflow of external air.

An inert gas supply line 10 and a water supply line 20 may be connected to the crusher hopper 110. For example, the inert gas supply line 10 may be connected between the first gate 111 and the second gate 112 and between the second gate 112 and the crushing unit 120 to supply an inert gas. At this time, the inert gas may be one or more selected from N², CO₂, and Ar, but is not limited thereto. Accordingly, the inert gas may be filled inside the crusher 100 to reduce the risk of fire or explosion due to exposure of materials of the lithium-ion batteries crushed in the crusher 100 to external air (for example, oxygen). Additionally, the inert gas supplied through the inert gas supply line 10 may be continuously supplied so as to fill the lithium-ion battery cathode material recovery system, which is operated in isolation from external air.

Additionally, the water supply line 20 may be connected between the second gate 112 and the crushing unit 120 to supply water. At this time, industrial water may be applied as water, but the present disclosure is not limited thereto. Accordingly, during crushing of the lithium-ion batteries in the crusher 100, when the internal temperature of the crusher 100 increases due to a reaction or short circuit of the materials of the lithium-ion batteries, or the risk of fire and explosion due to a process abnormality is detected, the risk of fire or explosion may be reduced by inputting water, and thus lowering the internal temperature of the crusher 100.

The crusher 100 may be provided with a dehydration unit 130 at the discharge end of the crusher 100. As the primary crushed material produced by crushing the lithium-ion batteries in the crusher 100, solid materials such as a waste battery structure, an anode (e.g., a mixture of graphite, a binder, and an additive, which is coated on copper), a separator, and a cathode (e.g., a cathode material and a binder which are coated on aluminum), and liquid materials such as an electrolyte, oil, and water that is introduced through the water supply line 20, which are contained inside the lithium ion battery, may be mixed and discharged to the discharge end.

Accordingly, the liquid materials may be separated from the primary crushed material so that the liquid materials do not flow into the next facility in the dehydration unit 130. For example, a centrifugal dehydrator or a screw press may be applied as the dehydration unit 130, but the present disclosure is not limited thereto. At this time, the dehydration unit 130 is blocked from external air so that the inert gas filled in the crusher 100 may be filled also in the dehydration unit 130.

The dryer 200 is a facility which is connected to the dehydration unit 130 to dry the primary crushed material from which the liquid materials discharged from the dehydration unit 130 are separated. The primary crushed material absorbs the liquid materials, and may contain even a small amount of the liquid materials that are not completely separated in the dehydration unit 130.

Accordingly, the primary crushed material must be dried to separate the cathode material in the subsequent process. For example, the primary crushed material may be dried under conditions of 50 to 120°C, and preferably, the temperature conditions may be set in consideration of the flash point of the organic solvent applied to the lithium-ion batteries. For example, the primary crushed material may be dried under conditions of 70 to 90°C.

At this time, the dryer 200 is blocked from external air so that the inert gas filled in the crusher 100 may also be filled in the dryer 200, and the inert gas heated in the heat exchanger 210 may be put into the dryer 200 and filled in the dryer 200.

Oil vapor generated during drying in the dryer 200 is collected separately and subjected to post-treatment at a gas treatment facility in the factory.

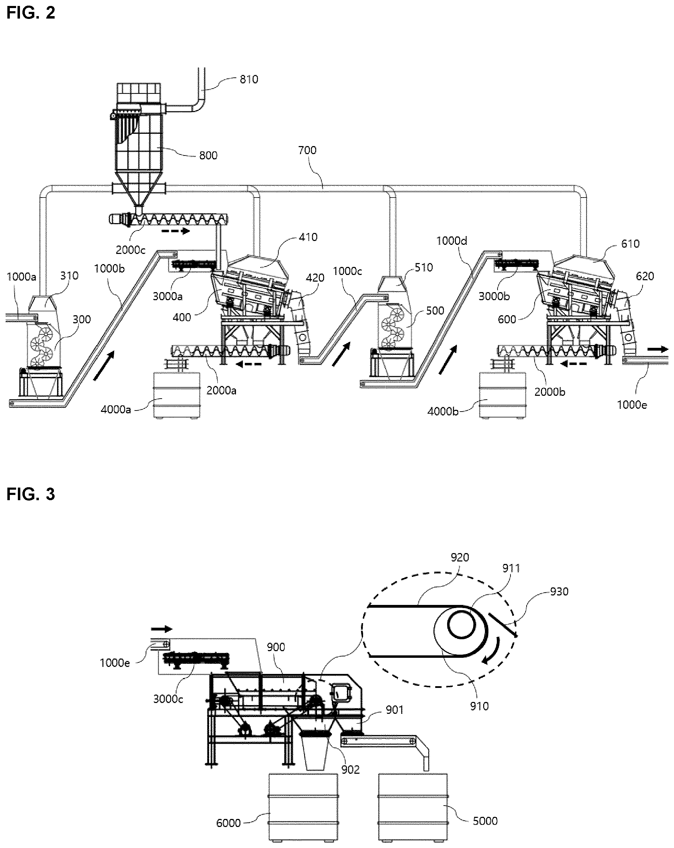

The primary crushed material that has been completely dried in the dryer 200 is moved to the first separator (300 in FIG. 2) using the conveyor 1000. At this time, the connection portion where the dryer 200 and the conveyor 1000 are connected and the conveyor 1000 are blocked from external air so that they may be filled with the inert gas inputted from the crusher 100 and the dryer 200.

Referring to FIG. 2, the lithium-ion battery cathode material recovery system may include a first separator 300, a first vibrating screen 400, a second separator 500, a second vibrating screen 600, and a dust collector 800.

The first separator 300 is a facility for separating the cathode material from the primary crushed material transferred through the conveyor 1000a. The primary crushed material consists of a crushed waste battery structure, an anode (e.g., a mixture of graphite, a binder, and an additive, which is coated on copper), a separator, and a cathode (e.g., a cathode material and a binder which are coated on aluminum), and the cathode material of the cathode is coated on aluminum together with the binder. Accordingly, in order to separate the cathode material from the primary crushed material, the primary crushed material must be treated so that the cathode material may be separated from aluminum by applying a physical impact to the primary crushed material. Therefore, the primary crushed material is input into the first separator 300 and a physical impact is applied to separate the cathode material from aluminum. Accordingly, a secondary crushed material may be produced in which the cathode material separated from aluminum and other solid materials are mixed. For example, the cathode material may be separated from aluminum using a hammer separator (hammer mill), but is not limited thereto.

The first separator 300 may be provided with a first separator hood 310 at the top. Since the first separator 300 is connected to the conveyor 1000a, which is blocked from external air, and the first separator 300 is also blocked from external air, there is a low possibility that dust generated during the process in the first separator 300 flows out to the outside. However, a case where dust is not well discharged to the outlet of the first separator 300 occurs, and thus dust remains in the first separator 300 so that the recovery efficiency of the cathode material may deteriorate. Accordingly, dust can be recovered through the first separator hood 310 to increase the recovery efficiency of the cathode material. At this time, a transfer pipe 700 is connected to the first separator hood 310 so that dust may be transferred to the dust collector 800.

The first separator 300 is connected to the dryer (200 in FIG. 1) through a conveyor 1000a blocked from external air, and thus the inert gas filled inside the dryer (200 in FIG. 1) flows into the first separator 300 so that the first separator 300 may also be filled with the inert gas. Accordingly, the risk of fire or explosion due to sparks or heat generation that may occur during operation of the first separator 300 can be reduced.

The secondary crushed material, which is a mixture of the cathode material and other solid materials discharged from the outlet of the first separator 300, may be transferred from the first separator 300 to the first vibrating screen 400 through a conveyor 1000b blocked from external air. At this time, a vibration feeder 3000a may be further installed at the end of the conveyor 1000b. The vibration feeder 3000a may transfer the secondary crushed material while generating vibration of a predetermined intensity so that the secondary crushed material flowing out from the conveyor 1000b may be spread uniformly and flow into the first vibrating screen 400. At this time, the vibration feeder 3000a is connected to the conveyor 1000b and the inlet of the first vibrating screen 400 in a form that is blocked from external air so that dust generated from the vibration feeder 3000a may not flow out to external air.

The first vibrating screen 400 may separate the cathode material and the other solid materials from the secondary crushed material that has been flown into the first vibrating screen 400 using differences in specific gravity, area density, and size. For example, the first vibrating screen 400 is horizontally spread out in a rectangular shape, and a vibration plate that can control the heading direction and the left and right tilt, and can control the intensity of vibration may be mounted thereon. At this time, the vibration plate may have irregularity processing applied thereto. When the secondary crushed material is introduced into one side of the first vibrating screen 400 on which the vibration plate is mounted and then the vibration plate is operated, the secondary crushed material moves under the influence of vibration along the tilt direction. At this time, the degree of bias of the secondary crushed material from the vibration plate may vary depending on the specific gravity or area density of the secondary crushed material. For example, the lower the specific gravity or area density, the greater the influence of tilt so that it may not move to the end of the first vibrating screen 400 depending on the influence of the left and right tilt of the vibration plate, and may be discharged to the side surface of the first vibrating screen 400. In general, the specific gravity and area density are higher in the order of cathode material >> Cu >= Al > separator so that the cathode material can be effectively separated in the manner as described above.

In addition, the first vibrating screen 400 may further include a screening mat. The screening mat has fine through holes formed therein and may separate the cathode material and other solid materials of a relatively large size compared to the cathode material from the secondary crushed material. When the screening mat is vibrated while moving the secondary crushed material on the screening mat, the cathode material comes out from the bottom of the screening mat through the through holes of the screening mat.

At this time, the other solid materials may not pass through the through holes of the screening mat, but move along the screening mat and are discharged as a tertiary crushed material. Accordingly, the cathode material that has come out from the bottom of the screening mat may be separately recovered. At this time, the size of the through holes of the screening mat may be 0.1 to 3 mm. Preferably, the size of the through holes of the screening mat may be 1 to 2 mm, and the cathode material and the other solid materials may be effectively separated within the above numerical range.

The cathode material separated from the first vibrating screen 400 may be transferred to a cathode material recovery bin 4000a through a screw conveyor 2000a connected to the bottom of the first vibrating screen 400. At this time, the screw conveyor 2000a is easy to block from external air, is advantageous for conveyance at various angles, and is suitable for conveying fine particle materials such as dust described above by minimizing the generation of dust. For example, a pipe screw conveyor type and a U-shaped screw conveyor type may be applied, but the present disclosure is not limited thereto.

The first vibrating screen 400 may include a first vibrating screen hood 410 at the top. Since the first vibrating screen 400 is connected to the conveyor 1000b and the vibration feeder 3000a, which are blocked from external air, and the first vibrating screen 400 is also blocked from external air, the possibility that dust generated from the first vibrating screen 400 during the process will flow out to the outside is low. However, if dust is not discharged well to the screw conveyor 2000a connected to the bottom of the first vibrating screen 400, and stays in the first vibrating screen 400 or moves on to the next process, the efficiency of recovering the cathode material may become poor. Accordingly, the recovery efficiency of the cathode material can be increased by recovering dust through the first vibrating screen hood 410. At this time, a transfer pipe 700 is connected to the first vibrating screen hood 410 so that dust may be transferred to the dust collector 800.

Since the first vibrating screen 400 is connected to the first separator 300 through the conveyor 1000b blocked from external air, the inert gas filled inside the first separator 300 flows into the first vibrating screen 400 so that the first vibrating screen 400 may also be filled with the inert gas. Accordingly, the risk of fire or explosion due to sparks or heat generation that may occur during operation of the first vibrating screen 400 can be reduced.

The tertiary crushed material discharged from the first vibrating screen 400 is discharged through the first vibrating screen outlet 420 and may be transferred to the second separator 500 through a conveyor 1000c blocked from external air.

The second separator 500 is a facility for separating the cathode material from the tertiary crushed material transferred through the conveyor 1000c. The tertiary crushed material includes the cathode material and the other solid materials, which have not been separated in the first vibrating screen 400, and may include the cathode material that has not yet been separated from aluminum in the first separator 300. Accordingly, the cathode material recovery efficiency may be increased by putting the tertiary crushed material into the second separator 500 and applying a physical impact thereto to separate the cathode material from aluminum. Accordingly, a quaternary crushed material may be produced in which the cathode material and other solid materials, that have been separated from aluminum, are mixed. For example, the cathode material may be separated from aluminum using a hammer separator (hammer mill), but the present disclosure is not limited thereto.

The second separator 500 may be provided with a second separator hood 510 at the top. Since the second separator 500 is connected to the conveyor 1 000c, which is blocked from external air, and the second separator 500 is also blocked from external air, the possibility that dust generated during the process in the second separator 500 may flow out to the outside is low. However, since dust is not well discharged through the outlet of the second separator 500 and stays in the second separator 500, the efficiency of recovering the cathode material may be lowered. Accordingly, dust may be recovered through the second separator hood 510 to increase the recovery efficiency of the cathode material. At this time, a transfer pipe 700 is connected to the second separator hood 510 so that dust may be transferred to the dust collector 800.

Since the second separator 500 is connected to the first vibrating screen 400 through the conveyor 1000c blocked from external air, the inert gas filled inside the first vibrating screen 400 flows into the second separator 500 so that the second separator 500 may also be filled with the inert gas. Accordingly, the risk of fire or explosion due to sparks or heat generation that may occur during operation of the second separator 500 can be reduced.

The quaternary crushed material, which is a mixture of the cathode material and the other solid materials, that have been discharged from the outlet of the second separator 500, may be transferred from the second separator 500 to the second vibrating screen 600 through a conveyor 1000d blocked from external air. At this time, a vibration feeder 3000b may be further installed at the end of the conveyor 1000d. The vibration feeder 3000b may transfer the quaternary crushed material flowing out of the conveyor 1000d while generating vibration of a predetermined intensity so that the quaternary crushed material may be spread uniformly and flow into the second vibrating screen 600. At this time, the vibration feeder 3000b has a structure that is blocked from external air and is connected to the conveyor 1000d and the inlet of the second vibrating screen 600, and thus dust generated from the vibration feeder 3000b may not flow out to external air.

The second vibrating screen 600 may separate the cathode material and the other solid materials from the quaternary crushed material that has been flown into the second vibrating screen 600 using differences in specific gravity, area density, and size. For example, the second vibrating screen 600 is horizontally spread out in a rectangular shape, and may have a vibration plate capable of controlling the heading direction and the left and right tilt and capable of controlling the intensity of vibration mounted thereon. At this time, the vibration plate may have irregularity processing applied thereto. When the quaternary crushed material is put into one side of the second vibrating screen 600 on which the vibration plate is mounted and then the vibration plate is operated, the quaternary crushed material moves under the influence of vibration along the tilt direction. At this time, the degree of bias of the quaternary crushed material from the vibration plate may vary depending on the specific gravity or area density of the quaternary crushed material. For example, the lower the specific gravity or area density, the greater the influence of tilt so that it may not move to the end of the second vibrating screen 600 depending on the influence of the left and right tilt of the vibration plate, and may be discharged to the side surface of the second vibrating screen 600. In general, the specific gravity and area density are higher in the order of cathode material >> Cu >= Al > separator so that the cathode material can be effectively separated in the manner as described above.

In addition, the second vibrating screen 600 may further include a screening mat. The screening mat is formed with fine through holes and may separate the cathode material and other solid materials of a relatively large size compared to the cathode material from the quaternary crushed material. When the screening mat is vibrated while moving the quaternary crushed material on the screening mat, the cathode material comes out from the bottom of the screening mat through the through hole of the screening mat. At this time, the other solid materials may not pass through the through holes of the screening mat, but move along the screening mat to discharge non-metals and non-ferrous metals, which are the other solid materials. Accordingly, the cathode material that has come out from the bottom of the screening mat may be separately recovered. At this time, the size of the through holes of the screening mat may be 0.1 to 3 mm. Preferably, when the size of the through holes of the screening mat is 1 to 2 mm, the cathode material and the other solid materials may be effectively separated.

The cathode material separated from the second vibrating screen 600 may be transferred to a cathode material recovery bin 4000b through a screw conveyor 2000b connected to the bottom of the second vibrating screen 600. At this time, the screw conveyor 2000b is easy to block from external air, is advantageous for conveyance at various angles, and is suitable for conveying fine particle materials such as dust described above by minimizing the generation of dust. For example, a pipe screw conveyor type and a U-shaped screw conveyor type may be applied, but the present disclosure is not limited thereto.

The second vibrating screen 600 may be provided with a second vibrating screen hood 610 at the top. Since the second vibrating screen 600 is connected to the conveyor 1000d and the vibration feeder 3000b, which are blocked from external air, and the second vibrating screen 600 is also blocked from external air, the possibility that dust generated from the second vibrating screen 600 during the process will flow out to the outside is low. However, if dust is not discharged well to the screw conveyor 2000b connected to the bottom of the second vibrating screen 600, and stays in the second vibrating screen 600 or moves on to the next process, the efficiency of recovering the cathode material may become poor. Accordingly, the recovery efficiency of the cathode material can be increased by recovering dust through the second vibrating screen hood 610. At this time, a transfer pipe 700 is connected to the second vibrating screen hood 610 so that dust may be transferred to the dust collector 800.

Since the second vibrating screen 600 is connected to the second separator 500 through the conveyor 1000d blocked from external air, the inert gas filled inside the second separator 500 flows into the second vibrating screen 600 so that the second vibrating screen 600 may also be filled with the inert gas. Accordingly, the risk of fire or explosion due to sparks or heat generation that may occur during operation of the second vibrating screen 600 can be reduced.

The non-metals and non-ferrous metals discharged from the second vibrating screen 600 are discharged through the second vibrating screen outlet 620 and may be transferred to the eddy current separator (900 in FIG. 3) through a conveyor 1000e blocked from external air.

Dust recovered through the first separator hood 310, the first vibrating screen hood 410, the second separator hood 510, and the second vibrating screen hood 610 may be transferred to the dust collector 800 through the transfer pipe 700 connected to the first separator hood 310, the first vibrating screen hood 410, the second separator hood 510, and the second vibrating screen hood 610. The dust collector 800 may have an air filtration-type dust collector applied thereto, and may have, for example, a bag filter-type dust collector applied thereto, but the present disclosure is not limited thereto.

The dust collector 800 sucks air using a fan motor installed in the dust collector 800 and sucks dust toward the filter installed in the dust collector 800. At this time, the speed at which the dust collector 800 sucks air is indicated as a filtration speed, and for example, the filtration speed may be 0.5 to 3.0 m/sec. Preferably, it may be 0.7 to 1.1 m/sec. If the filtration speed is less than 0.5 m/sec, the power to suck in dust is weak so that the effect of recovering dust is reduced, and if the filtration speed is more than 3.0 m/sec, dust is strongly adsorbed on the filter so that there are a disadvantage of becoming difficult to recover dust and a disadvantage of shortening the filter replacement cycle, and too strong suction may increase the amount of dust scattered in the process so that it is preferable to operate the dust collector 800 at a filtration speed in the above numerical range.

Dust recovered through the dust collector 800 is collected at the bottom of the dust collector 800 by gravity, is discharged through a rotary valve (not shown) formed at the bottom of the dust collector 800, and is then transferred through a screw conveyor 2000c connected to the rotary valve (not shown) so that it may be put into the first vibrating screen 400. At this time, the screw conveyor 2000c is easy to block from external air, is advantageous for conveyance at various angles, and is suitable for conveying fine particle materials such as dust described above by minimizing the generation of dust. For example, a pipe screw conveyor type and a U-shaped screw conveyor type may be applied, but the present disclosure is not limited thereto. Accordingly, the cathode material contained in dust can be recovered, and thus the recovery efficiency of the cathode material can be increased.

In addition, when the dust collector 800 sucks dust, the inert gas filled in the first separator 300, the first vibrating screen 400, the second separator 500, and the second vibrating screen 600 may also be recovered together. At this time, the recovered inert gas is discharged to an exhaust pipe 810 installed in the dust collector 800, and the inert gas discharged to the exhaust pipe 810 may be separately recovered, filtered, and re-supplied to the inert gas supply line (FIGS. 1 and 10) that supplies it to the crusher (100 in FIG. 1). Accordingly, the inert gas may be recycled and automatically circulated, thereby ensuring economic efficiency and efficiency of the process.

Referring to FIG. 3, the lithium-ion battery cathode material recovery system may include an eddy current separator 900.

The eddy current separator 900 is a facility for separating the non-ferrous metals and non-metals transferred through the conveyor 1000e.

The non-ferrous metals and non-metals discharged from the second vibrating screen (600 in FIG. 2) may be transferred from the second vibrating screen (600 in FIG. 2) to the eddy current separator 900 through the conveyor 1000e blocked from external air. At this time, a vibration feeder 3000c may be further installed at the end of the conveyor 1000e. The vibration feeder 3000c may transfer the non-ferrous metals and non-metals while generating vibration of a predetermined intensity so that the non-ferrous metals and non-metals flowing out from the conveyor 1000e may be spread uniformly and flow into the eddy current separator 900. At this time, the vibration feeder 3000c is connected to the conveyor 1000e and the inlet of the eddy current separator 900 in a form that is blocked from external air, and thus dust generated from the vibration feeder 3000c may not flow out to external air.

The eddy current separator 900 is a device that separates non-ferrous metals using the principle of high-frequency magnetic field induction. For example, the eddy current separator 900 is located above the non-metal discharge end 902, and a magnetic rotor 911 composed of a strong magnet is provided inside a non-magnetic rotor 910 that drives the conveyor belt 920. The magnetic rotor 911 is driven independently of the movement of the non-magnetic rotor 910, and as the magnetic rotor 911 rotates at high speed, a strong electromagnetic field is formed on the surface of the non-magnetic rotor 910.

At this time, when the non-metals flown in along the conveyor belt 920 come near the non-magnetic rotor 910, since the non-metals are not affected by the electromagnetic field generated by the magnetic rotor 911, they cannot go over a separation plate 930 along the conveyor belt 920 as they are and fall to the non-metal discharge end 902.

In addition, when the non-ferrous metals flown in along the conveyor belt 920 comes near the non-magnetic rotor 910, since the non-ferrous metals are affected by the electromagnetic field generated by the magnetic rotor 911, they float in a certain region to go over the separation plate 930 and fall to the non-ferrous metal discharge end 901 disposed farther than the non-metal discharge end 902. Accordingly, the non-metals that fell into the non-metal discharge end 902 are recovered into a non-metal recovery bin 6000, and the non-ferrous metals that fell into the non-ferrous metal discharge end 901 are recovered into a non-ferrous metal recovery bin 5000 so that the non-ferrous metals and non-metals may be effectively separated.

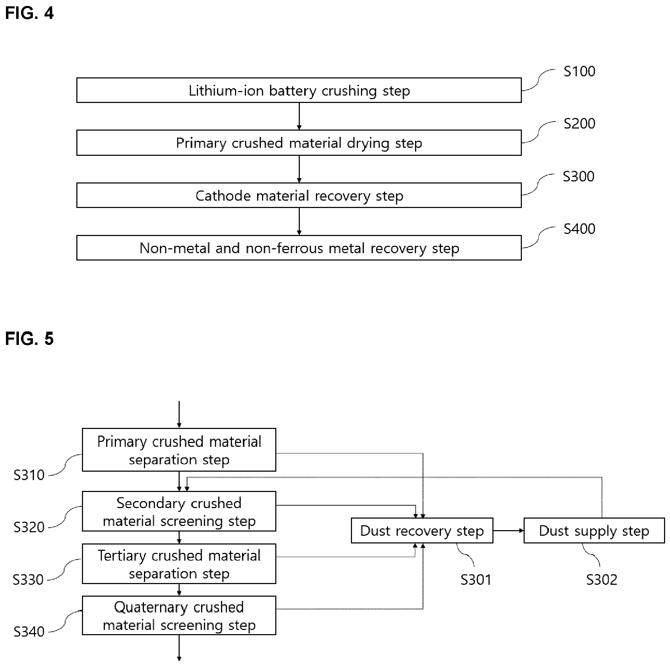

FIGS. 4 and 5 are flowcharts of a lithium-ion battery cathode material recovery method according to the embodiment of the present disclosure.

Referring to FIG. 4, the lithium-ion battery cathode material recovery method may proceed in the following steps based on the configuration described through FIGS. 1 to 3 above.

The lithium-ion battery crushing step S100 is a step of physically crushing lithium-ion batteries using a crusher to produce a primary crushed material. At this time, the lithium-ion batteries may be input into the lithium-ion battery crushing step S100 in various forms. For example, they may be input as disassembled lithium-ion batteries in the form of a module, pack, or cell, but are not limited thereto.

In the lithium-ion battery crushing step S100, the crusher may include one selected from a single-axis crusher, a two-axis crusher, a three-axis crusher, a four-axis crusher, and combinations thereof, but is not limited thereto. Preferably, a four-axis crusher may be used or included taking into account of the input capacity and the size of the lithium-ion batteries to be crushed. Accordingly, the lithium-ion batteries may be crushed to a size of 10 to 100 mm to produce the primary crushed material. Preferably, the lithium-ion batteries may be crushed to a size of 50 mm or less to produce the primary crushed material.

At this time, the process environment of the crusher may be carried out in an environment filled with an inert gas. For example, the inert gas may be one or more selected from N₂, CO₂, and Ar, but is not limited thereto. Accordingly, the risk of fire or explosion due to exposure of materials of the lithium-ion batteries crushed in the crusher to the air may be reduced.

Further in the lithium-ion battery crushing step S100, during crushing of the lithium-ion batteries using the crusher, when the internal temperature of the crusher increases due to a reaction or short circuit of the materials of the lithium-ion batteries, or the risk of fire and explosion due to a process abnormality is detected, the risk of fire or explosion may be reduced by inputting water, and thus lowering the internal temperature of the crusher.

In the lithium-ion battery crushing step S100, liquid materials that may be contained in the primary crushed material, such as electrolyte, oil, and water, may be removed and then transferred to the next step. For example, a centrifugal dehydrator or screw press may be applied to remove the liquid materials, but is not limited thereto.

The lithium-ion battery crushing step S100 can be performed in an environment filled with the inert gas, thereby reducing the risk of fire or explosion.

The primary crushed material drying step S200 is a step of drying the primary crushed material produced in the lithium-ion battery crushing step S100. The primary crushed material absorbs the liquid materials and may contain the liquid materials that have not been completely separated in the lithium-ion battery crushing step S100. Accordingly, the primary crushed material must be dried in order to effectively separate the cathode material in the subsequent process. For example, the primary crushed material can be dried under conditions of 50 to 120°C using a dryer, and preferably the temperature conditions can be set by taking into account of the flash point of the organic solvent applied to the lithium ion batteries. For example, the primary crushed material may be dried under conditions of 70 to 90°C.

The primary crushed material drying step S200 can be performed in an environment filled with the inert gas, thereby reducing the risk of fire or explosion.

The cathode material recovery step S300 is a step of separating and recovering the cathode material from the primary crushed material.

The detailed steps of the cathode material recovery step S300 will be described below with reference to FIG. 5.

The primary crushed material separation step S310 is a step for separating the cathode material from the primary crushed material dried in the primary crushed material drying step (S200 in FIG. 4). The primary crushed material consists of a crushed waste battery structure, an anode (e.g., a mixture of graphite, a binder, and an additive, which is coated on copper), a separator, and a cathode (e.g., a cathode material and a binder which are coated on aluminum), and the cathode material of the cathode may be coated on aluminum together with the binder. Accordingly, in order to separate the cathode material from the primary crushed material, the primary crushed material must be treated so that the cathode material may be separated from aluminum by applying a physical impact to the primary crushed material. Therefore, the primary crushed material is input into the first separator and a physical impact is applied to separate the cathode material from aluminum. Accordingly, a secondary crushed material may be produced in which the cathode material separated from aluminum and other solid materials are mixed. At this time, the first separator may include a hammer separator (hammer mill), but is not limited thereto.

The first crushed material separation step S310 can be performed in an environment filled with the inert gas, thereby reducing the risk of fire or explosion.

The secondary crushed material screening step S320 is a step of separating the cathode material and the other solid materials from the secondary crushed material produced in the primary crushed material separation step S310 using differences in specific gravity, area density, and size.

For example, the first vibrating screen which is horizontally spread out in a rectangular shape, and on which a vibration plate that can control the heading direction and the left and right tilt and can control the intensity of vibration is mounted may be used. At this time, the vibration plate may have irregularity processing applied thereto.

When the secondary crushed material is put into one side of the first vibrating screen on which the vibration plate is mounted and then the vibration plate is operated, the secondary crushed material moves under the influence of vibration along the tilt direction. At this time, the degree of bias of the secondary crushed material from the vibration plate may vary depending on the specific gravity or area density of the secondary crushed material. For example, the lower the specific gravity or area density, the greater the influence of tilt so that it may not move to the end of the first vibrating screen depending on the influence of the left and right tilt of the vibration plate, and may be discharged to the side surface of the first vibrating screen. In general, the specific gravity and area density are higher in the order of cathode material >> Cu >= Al > separator so that the cathode material can be effectively separated in the manner as described above.

In addition, other solid materials of a relatively large size compared to the cathode material can be separated from the secondary crushed material using the first vibrating screen further including a screening mat in which fine through holes are formed.

For example, when the screening mat is vibrated while moving the secondary crushed material on the screening mat, the cathode material comes out from the bottom of the screening mat through the through holes of the screening mat.

At this time, the other solid materials may not pass through the through holes of the screening mat, but move along the screening mat and are discharged as a tertiary crushed material. Accordingly, the cathode material that has come out from the bottom of the screening mat may be separately recovered. At this time, the size of the through holes of the screening mat may be 0.1 to 3 mm. Preferably, when the size of the through holes of the screening mat is 1 to 2 mm, the cathode material and other solid materials may be effectively separated.

The secondary crushed material screening step S320 can be performed in an environment filled with the inert gas, thereby reducing the risk of fire or explosion.

The tertiary crushed material separation step S330 is a step for separating the cathode material from the tertiary crushed material produced in the secondary crushed material screening step S320. The tertiary crushed material includes the cathode material and other solid materials that have not been separated in the first vibrating screen, and may include the cathode material that has not yet been separated from aluminum in the first separator. Accordingly, in order to separate the cathode material from the tertiary crushed material, the tertiary crushed material must be treated so that the cathode material may be separated from aluminum by applying a physical impact to the tertiary crushed material. Therefore, the tertiary crushed material is input into the second separator and a physical impact is applied to separate the cathode material from aluminum. Accordingly, a quaternary crushed material may be produced in which the cathode material separated from aluminum and other solid materials are mixed. At this time, the second separator may include a hammer separator (hammer mill), but is not limited thereto.

The tertiary crushed material separation step S330 can be performed in an environment filled with the inert gas, thereby reducing the risk of fire or explosion.

The quaternary crushed material screening step S340 is a step of separating the cathode material and the other solid materials from the quaternary crushed material produced in the tertiary crushed material separation step S330 using differences in specific gravity, area density, and size.

For example, the second vibrating screen which is horizontally spread out in a rectangular shape, and on which a vibration plate that can control the heading direction and the left and right tilt and can control the intensity of vibration is mounted may be used. At this time, the vibration plate may have irregularity processing applied thereto.

When the quaternary crushed material is put into one side of the second vibrating screen on which the vibration plate is mounted and then the vibration plate is operated, the quaternary crushed material moves under the influence of vibration along the tilt direction. At this time, the degree of bias of the quaternary crushed material from the vibration plate may vary depending on the specific gravity or area density of the quaternary crushed material. For example, the lower the specific gravity or area density, the greater the influence of tilt so that it may not move to the end of the second vibrating screen depending on the influence of the left and right tilt of the vibration plate, and may be discharged to the side surface of the second vibrating screen. In general, the specific gravity and area density are higher in the order of cathode material >> Cu >= Al > separator so that the cathode material can be effectively separated in the manner as described above.

In addition, other solid materials of a relatively large size compared to the cathode material can be separated from the quaternary crushed material using the second vibrating screen further including a screening mat in which fine through holes are formed.

For example, when the screening mat is vibrated while moving the quaternary crushed material on the screening mat, the cathode material comes out from the bottom of the screening mat through the through holes of the screening mat.

At this time, the other solid materials may not pass through the through holes of the screening mat, but move along the screening mat, causing non-metals and non-ferrous metals to be discharged. Accordingly, the cathode material that has come out from the bottom of the screening mat may be separately recovered. At this time, the size of the through holes of the screening mat may be 0.1 to 3 mm. Preferably, when the size of the through holes of the screening mat is 1 to 2 mm, the cathode material and other solid materials may be effectively separated.

The quaternary crushed material screening step S340 can be performed in an environment filled with the inert gas, thereby reducing the risk of fire or explosion.

The dust recovery step S301 is a step of recovering dust generated in the primary crushed material separation step S310, the secondary crushed material screening step S320, the tertiary crushed material separation step S330, and the quaternary crushed material screening step S340 using a dust collector.

The dust collector can recover dust by sucking in dust generated in the primary crushed material separation step S310, the secondary crushed material screening step S320, the tertiary crushed material separation step S330, and the quaternary crushed material screening step S340 together with the inert gas filled in each step. At this time, the dust collector may include a bag filter-type dust collector, but is not limited thereto.

The dust collector sucks air using a fan motor installed in the dust collector and sucks dust toward the filter installed in the dust collector. At this time, the speed at which the dust collector sucks air is indicated as a filtration speed, and for example, the filtration speed may be 0.5 to 3.0 m/sec. Preferably, it may be 0.7 to 1.1 m/sec. If the filtration speed is less than 0.5 m/sec, the power to suck in dust is weak so that the effect of recovering dust is reduced, and if the filtration speed is more than 3.0 m/sec, dust is strongly adsorbed on the filter so that there are a disadvantage of becoming difficult to recover dust and a disadvantage of shortening the filter replacement cycle, and too strong suction is not desirable as it can increase the amount of dust scattered in the process. Accordingly, dust recovered into the dust collector is collected by gravity at the bottom of the dust collector so that dust can be recovered.

In addition, the inert gas recovered together when the dust collector sucks in dust may be discharged through an exhaust pipe installed in the dust collector. Thereafter, the inert gas discharged through the exhaust pipe may be filtered, recovered, and re-supplied together with the inert gas supplied to the crusher. Accordingly, the inert gas may be recycled and automatically circulated, thereby ensuring economic feasibility and efficiency of the process.

The dust supply step S302 is a step of supplying dust recovered from the dust collector to the secondary crushed material screening step S320. Dust recovered from the dust collector may be transferred and put into the first vibrating screen. Accordingly, the cathode material contained in dust can be recovered again, and thus the recovery efficiency of the cathode material can be increased.

Referring again to FIG. 4, the non-metal and non-ferrous metal recovery step S400 will be described.

The non-metal and non-ferrous metal recovery step S400 is a step for separating the non-ferrous metals and non-metals produced in the quaternary crushed material screening step (S340 in FIG. 5) using an eddy current separator. The eddy current separator is a device that separates non-ferrous metals using the principle of high-frequency magnetic field induction, and non-ferrous metals affected by the electromagnetic field and non-metals not affected by the magnetic field may be separated using an electromagnetic field formed by a magnetic rotor mounted on the eddy current separator.

For example, the non-metals flown in along the conveyor belt of the eddy current separator are not affected by the electromagnetic field generated by the magnetic rotor so that they fall to the non-metal discharge end without going over a separation plate along the conveyor belt as they are.

In addition, the non-ferrous metals flown in along the conveyor belt are affected by the electromagnetic field generated by the magnetic rotor, float in a certain region to go over the separation plate and fall to the non-ferrous metal discharge end disposed farther than the non-metal discharge end. Accordingly, the non-ferrous metals and non-metals may be effectively separated.

As described above, the specific description of the present disclosure has been made by the embodiments with reference to the accompanying drawings, but since the above-described embodiments have only been explained by referring to preferred examples of the present disclosure, it should not be understood that the present disclosure is limited to the above-described embodiments, and the scope of rights of the present disclosure should be understood as the claims to be described later and equivalent concepts thereof.

For example, to aid understanding, drawings schematically show each of components as the main component, and the thickness, length, number, etc. of each component shown may differ from the actual ones during the drawing process. In addition, the materials, shapes, dimensions, etc. of each component shown in the above embodiments are only examples and are not particularly limited, and various changes are possible without substantially departing from the effect of the present disclosure.

### [Explanation of reference numerals]

10: Inert gas supply line
20: Water supply line
100: Crusher
110: Crusher hopper
111: First gate
112: Second gate
120: Crushing unit
130: Dehydration unit
200: Dryer
210: Heat exchanger
300: First separator
310: First separator hood
400: First vibrating screen
410: First vibrating screen hood
420: First vibrating screen outlet
500: Second separator
510: Second separator hood
600: Second vibrating screen
610: Second vibrating screen hood
620: Second vibrating screen outlet
700: Transfer pipe
800: Dust collector
810: Exhaust pipe
900: Eddy current separator
901: Non-ferrous metal discharge end
902: Non-metal discharge end
910: Non-magnetic roller
911: Magnetic rotor
920: Conveyor belt
930: Separation plate
1000: Conveyor
2000a, 2000b, 2000c: Screw conveyor
3000a, 3000b, 3000c: Vibration feeder
4000a, 4000b: Cathode material recovery bin
5000: Non-ferrous metal recovery bin
6000: Non-metal recovery bin

## Claims

1. A lithium-ion battery cathode material recovery system comprising:
a crusher that physically crushes lithium-ion batteries to produce a primary crushed material;
a dryer for drying the primary crushed material;
a first separator that produces a secondary crushed material by applying a physical impact in order to separate the cathode material from the primary crushed material that has passed through the dryer;
a first vibrating screen for separating the cathode material from the secondary crushed material that has passed through the first separator using one or more of specific gravity, area density, and particle size of the cathode material, and then recovering the cathode material and producing a tertiary crushed material;
a second separator that produces a quaternary crushed material by applying a physical impact in order to separate the cathode material from the tertiary crushed material that has passed through the first vibrating screen;
a second vibrating screen for separating the cathode material from the quaternary crushed material that has passed through the second separator using one or more of specific gravity, area density, and particle size of the cathode material, and then recovering the cathode material and discharging non-ferrous metals and non-metals;
a dust collector for recovering dust generated from at least one of the first separator, the second separator, the first vibrating screen, and the second vibrating screen; and
an eddy current separator for separating the non-ferrous metals and non-metals discharged from the second vibrating screen,
wherein the crusher, the dryer, the first separator, the first vibrating screen, the second separator, the second vibrating screen, and the eddy current separator are sequentially connected by a conveyor, thereby allowing the primary crushed material, the secondary crushed material, the tertiary crushed material, the quaternary crushed material, and the non-ferrous metals and non-metals to be automatically transported so that the process of separating the cathode material from the lithium-ion batteries is performed continuously, while improving the recovery rate due to scattering of the cathode material powder.

2. The lithium-ion battery cathode material recovery system of claim 1, wherein dust recovered in the dust collector is put into the first vibrating screen through a screw conveyor.

3. The lithium-ion battery cathode material recovery system of claim 1 or 2, wherein the crusher, the dryer, the first separator, the first vibrating screen, the second separator, the second vibrating screen, the eddy current separator, the dust collector, the conveyor, and the screw conveyor are sealed so that the inflow of external air is prevented, and are operated in an inert gas environment so that the risk of fire and explosion is removed during the cathode material recovery process.

4. The lithium-ion battery cathode material recovery system of claim 3, wherein the inert gas includes at least one of N₂, CO₂, and Ar.

5. The lithium-ion battery cathode material recovery system of one of claims 1-4, wherein the dust collector is driven at a filtration speed of 0.5 to 3.0 m/sec.

6. The lithium-ion battery cathode material recovery system of one of claims 1-5, further comprising at least one of:
a first separator hood installed in the first separator;
a second separator hood installed in the second separator;
a first vibrating screen hood installed on the first vibrating screen; and
a second vibrating screen hood installed on the second vibrating screen, and thus allowing dust to be recovered by the dust collector, thereby improving the loss of recovery rate due to scattering of the cathode material powder occurring in the lithium-ion battery recycling process.

7. The lithium-ion battery cathode material recovery system of one of claims 1-6, wherein the exhaust gas discharged from the dust collector is filtered and then continuously supplied to the crusher, thereby improving the economic feasibility and efficiency of the process.

8. A lithium-ion battery cathode material recovery method, as a cathode material recovery method using the lithium-ion battery cathode material recovery system according to claim 1, comprising:
a lithium-ion battery crushing step of crushing the lithium-ion batteries with the crusher to produce the primary crushed material;
a primary crushed material drying step of drying the primary crushed material in the dryer;
a cathode material recovery step of recovering the cathode material from the primary crushed material dried in the primary crushed material drying step; and
a non-metal and non-ferrous metal recovery step of separating and recovering the non-metals and the non-ferrous metals by separating the non-metals and the non-ferrous metals that have passed the cathode material recovery step using the eddy current separator.

9. The lithium-ion battery cathode material recovery method of claim 8, wherein the cathode material recovery step includes:
a primary crushed material separation step of separating the cathode material using the first separator to produce the secondary crushed material;
a secondary crushed material screening step of separating the cathode material contained in the secondary crushed material produced in the primary crushed material separation step using one or more of specific gravity, area density, and particle size, and separating the cathode material using the first vibrating screen to produce a tertiary crushed material;
a tertiary crushed material separation step of separating the cathode material contained in the tertiary crushed material produced in the secondary crushed material screening step using the second separator to produce the quaternary crushed material; and
a quaternary crushed material screening step of separating the cathode material contained in the quaternary crushed material produced in the tertiary crushed material separation step using one or more of specific gravity, area density, and particle size, and separating the cathode material using the second vibrating screen to produce the non-metals and the non-ferrous metals.

10. The lithium-ion battery cathode material recovery method of claim 8 or 9, wherein the cathode material recovery step includes:
a dust recovery step of recovering dust generated in the primary crushed material separation step, the secondary crushed material screening step, the tertiary crushed material separation step, and the quaternary crushed material screening step using the dust collector; and
a dust supply step of supplying dust recovered in the dust recovery step to the secondary crushed material screening step.
